**Europäisches Patentamt**

(19) **European Patent Office**

**Office européen des brevets**

(11) Veröffentlichungsnummer : **0 026 379**
**B1**

(12) **EUROPÄISCHE PATENTSCHRIFT**

(45) Veröffentlichungstag der Patentschrift :
02.01.86

(51) Int. Cl.⁴ : **G 02 B 6/24**

(21) Anmeldenummer : 80105479.2

(22) Anmeldetag : 12.09.80

(54) Vorrichtung zum seitlichen Einkoppeln von Licht in einen Glasfaser-Lichtwellenleiter.

(30) Priorität : 25.09.79 DE 2938810

(43) Veröffentlichungstag der Anmeldung :
08.04.81 Patentblatt 81/14

(45) Bekanntmachung des Hinweises auf die Patenterteilung : 02.01.86 Patentblatt 86/01

(84) Benannte Vertragsstaaten :
AT BE CH DE FR GB IT LI NL SE

(56) Entgegenhaltungen :
FR-A- 2 292 243
FR-A- 2 344 855
SIEMENS FORSCHUNGS UND ENTWICKLUNGSBE-
RICHT, Band 8, Nr.1, 1979, Berlin, DE, G. WINZER:
"Tapping elements with thin-film beam splitters directly applied to optical fiber endfaces", Seiten 50-55

(73) Patentinhaber : **Siemens Aktiengesellschaft**
**Berlin und München Wittelsbacherplatz 2**
**D-8000 München 2 (DE)**

(72) Erfinder : **Winzer, Gerhard, Dr.**
**Günderodestrasse 16**
**D-8000 München 82 (DE)**

0 026 379

**Beschriebung**

Die vorliegende Erfindung betrifft eine Vorrichtung zum seitlichen Einkoppeln von Licht in einen Glasfaser-Lichtwellenleiter nach dem Oberbegriff des Patentanspruchs 1.

Eine Vorrichtung der genannten Art ist aus « Siemens Forschungs- und Entwicklungsbericht », Band 8, Nr. 1, 1979, S. 50 bis 55 bekannt. Hierbei nimmt die als Strahlungsteiler ausgebildete Spiegelschicht den gesamten Querschnitt des Lichtwellenleiters ein.

Aus der US-A-4 130 345 ist eine Vorrichtung zum seitlichen Einkoppeln von Licht in einen Glasfaser-Lichtwellenleiter bekannt, die sich von einer Vorrichtung der genannten Art nur dadurch unterscheidet, daß die im Wellenleiter angeordnete und dessen ganzen Querschnitt einnehmende Spiegelschicht in Form einer strahlteilenden Folie nicht flächig auf eine Stirnfläche des Lichtwellenleites aufgebracht ist, sondern nur die (abgefasten) Kanten des unterbrochenen Lichtwellenleiters berührt.

Bei dem Koppler für Glasfaser-Lichtwellenleiter nach der japanischen Offenlegungsschrift 52-64939 erstreckt sich das Koppelelement in Form eines schräg zur Achse des Wellenleiters liegenden Spaltes zwischen polierten Endflächen des Wellenleiters ebenfalls über den gesamten Querschnitt.

Von einem strahlungsteilenden Belag auf schräg zur Achse aneinanderstoßenden Stirnflächen eines Lichtwellenleiters macht auch die Vorrichtung zum seitlichen Einkoppeln nach der Zeitschrift « IBM. Techn. Discl. Bull. », Vol. 16, Nr. 1, Juni 1973, S. 146 und 147, Gebrauch. An der Stelle des Belages ist der Querschnitt des einen Lichtwellenleiters durch Eingriff des koppelnden Lichtwellenleiters zwar vermindert. Der strahlungsteilende Belag bedeckt jedoch die gesamte aktive Querschnittsfläche des Lichtwellenleiters.

In der DE-OS 27 51 915 ist eine Vorrichtung zum seitlichen Einkoppeln von Licht in einen Glasfaser-Lichtwellenleiter mit einem lichtführenden Kern beschrieben, bei der das seitliche Einkoppeln über eine geneigt zur Achse des Lichtwellenleiters angeordnete, den ganzen Querschnitt des Wellenleiters einnehmende und an Luft grenzende Stirnfläche erfolgt, die als brechende Fläche wirkt. Die Stirnfläche kann mit einem reflektierenden Belag bedeckt sein.

Aufgabe der vorliegenden Erfindung ist es, eine Vorrichtung der eingangs genannten Art anzugeben, welche die im Glasfaser-Lichtwellenleiter geführte Strahlung in nur geringem Maße schwächt und die einen hohen Einkoppelwirkungsgrad ermöglicht.

Diese Aufgabe wird durch die im kennzeichnenden Teil des Patentanspruchs 1 angegebenen Merkmale gelöst.

Diese Lösung verwirklicht bei einer Vorrichtung der eingangs genannten Art erstmals das Prinzip der geometrischen Strahlteilung.

Es sei an dieser Stelle darauf hingewiesen, daß dieses Prinzip bereits bei faseroptischen Kopplern angewandt worden ist, wie sie in der FR-A-2 344 855 (= DE-A-2 614 051) beschrieben sind. Bei diesen Kopplern handelt es sich aber um Vorrichtungen einer anderen Gattung, die zum seitlichen Einkoppeln von Licht in Bündel aus Glasfaser-Lichtwellenleiter dienen, deren Durchmesser ungleich größer ist als der von einzelnen Glasfaser-Lichtwellenleitern. Das Koppelelement besteht aus einem in das Bündel eingesetzten Lichtleitstab aus einem Vollglaskern gleichen Durchmessers wie der des Bündels mit sich nur teilweise über den Kernquerschnitt erstreckenden, schräg zur Achse orientierten Vollspiegeln.

Bei der erfindungsgemäßen Lösung wird die geringe Schwächung der im Lichtwellenleiter geführten Strahlung in erster Linie dadurch erreicht, daß die Spiegelschicht nur einen geringen Teil des Kernbereichs des Wellenleiters einnimmt. Nimmt sie beispielsweise 10 % der gesamten Querschnittsfläche des Kerns ein, so wird die geführte Strahlung höchstens um 10 % geschwächt.

Der hohe Einkoppelwirkungsgrad wird in erster Linie durch das hohe Reflexionsvermögen der Spielgelschicht erreicht. Je höher dieses Reflexionsvermögen ist, desto höher kann der Einkoppelwirkungsgrad gemacht werden. In jedem Fall soll das Reflexionsvermögen größer als 50 % sein.

Für einen hohen Einkoppelwirkungsgrad ist es außerdem noch notwendig, daß möglichst alle einkoppelnde Strahlung auf die Spiegelschicht trifft.

Bevorzugte und vorteilhafte Augestaltungen der erfindungsgemäßen Vorrichtung gehen aus den Unteransprüchen 2 bis 9 hervor.

Eine erfindungsgemäße Vorrichtung eignet sich besonders zur Lichteinkopplung von Teilnehmerendgeräten in optische Datenschienen. Für bit-parallele Dateneingabe läßt sich die erfindungsgemäße Vorrichtung zu einem Einkoppelblock erweitern.

Die Herstellung einer erfindungsgemäßen Vorrichtung ist problemlos. Es können alle Technologien verwendet werden, die zur Herstellung von Koppelelementen nach dem Strahlteilerprinzip verwendet werden.

Ausführungsbeispiele der Erfindung werden anhand der Figuren in der folgenden Beschreibung näher erläutert. Es zeigen :

Figur 1 eine Seitenansicht eines ersten Ausführungsbeispiels der Erfindung, das ein Dreitor ist,

Figur 2 eine Ansicht des Ausführungsbeispiels nach Figur 1, wie es von dem dort angedeuteten Auge gesehen wird,

Figur 3 einen zentralen vertikalen Längsschnitt durch ein zweites Ausführungsbeispiel der Erfindung, das ein Zweitor ist,

Figur 4 eine Ansicht einer freigelegten Schnittfläche eines Wellenleiterabschnitts, auf der die Spiegelschicht aufgebracht ist, wobei der über dem Wellenleiter befindliche Teil weggelassen, der Trägerkörper des Wellenleiters aber gezeigt ist, und

Figur 5 einen Einkoppelblock in perspektivischer Darstellung.

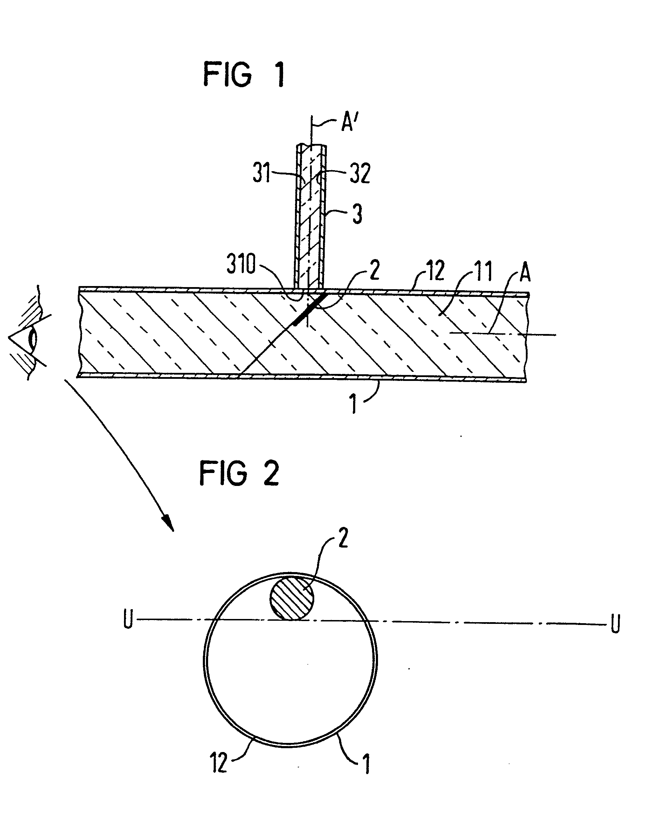

In dem Ausführungsbeispiel nach Figur 1 ist in einer Dickkernglasfaser 1 mit Stufenindexprofil eine Spiegelschicht 2 angeordnet, die nur einen geringen Teil des von einem Mantel 12 aus Glas umgebenden Kerns 11 aus Glas höheren Brechungsindexes einnimmt. Die Spiegelschicht 2 ist in einem Winkel von 45° zur Achse A der Dickkernfaser geneigt und befindet sich in der Darstellung der Figur 1 im oberen Teil des Kerns 11. Der Mantel 12 der Faser ist relativ zum Durchmessers des Kerns 11 dünn. Der Kern 11 ist der Bereich, in dem hauptsächlich die Strahlung, in aller Regel licht zwischen dem Wärmestrahlungsbereich und dem kurzwelligen UV-Bereich, geführt wird.

Über der Spiegelschicht 2 ist eine Glasfaser 3 mit Stufenindexprofil auf die Dickkernfaser so aufgesetzt, daß deren Achse A' die im Kern 11 der Dickkernfaser 1 befindliche Spiegelschicht 2 im Winkel von 45° trifft. Auch die Glasfaser 3 weist einen Kern 31 und einen diesen umgebenden Mantel 32 auf. Kern 31 und Mantel 32 sind aus Glas, wobei das Glas der Kerns 31 einen höheren Brechungsindex aufweist als das Glas des Mantels 32.

Der Durchmesser des Kerns 31 der Glasfaser 3 ist kleiner als der Durchmesser des Kerns der Dickkernfaser 1. Die Stirnfläche 310 des Kerns 31, die der Dickkernfaser zugewandt ist, bildet ein Strahlungsaustrittsfenster, aus der die Strahlung als Strahlenkegel austritt. Das durch diese Strahlung auf die Ebene der Spiegelschicht 2 projizierte Strahlungsaustrittsfenster, das einen Kreisquerschnitt aufweist, ist eine Ellipse. Die Spiegelschicht 2 ist ebenfalls als Ellipse ausgebildet und überdeckt die Fläche der projizierten Ellipse.

Wir die Spiegelschicht 2 durch die Dickkernfaser 1 betrachtet, wie es durch das stilisierte Auge in Figur 1 angedeutet ist, so erscheint sie wieder kreisförmig, wie es in der Figur 2 durch den Schraffierten Bereich gezeigt ist. In der Figur 2 ist die Glasfaser 3 weggelassen. Figur 2 entspricht auch nicht genau dem Maßstab der Figur 1.

Zweckmäßig ist es, wenn die numerische Apertur der Dickkernfaser mindestens so groß ist, wie die numerische Apertur der Glasfaser 3.

Die Spiegelschicht 2 könnte auch den ganzen Bereich oberhalb der in Figur 2 eingezeichneten Linie U-U einnehmen. Allerdings treten dann etwas größere Verluste auf, weil die in der Dickkernfaser 1 geführte Strahlung stärker geschwächt wird.

Die Spiegelschicht sollte, wie schon erwähnt, größtmögliche Reflexionsvermögen aufweisen. Bei dielektrischer Verspiegelung kann ein Reflexionsvermögen von nahezu 100 % erreicht werden. Es kann auch eine Metallverspiegelung verwendet werden.

Als ein Beispiel sei eine Dickkernfaser 1 von 110 $\mu$m Kerndurchmesser und 115 $\mu$m Gesamtdurchmesser und eine Glasfaser 3 mit 40 $\mu$m Kerndurchmesser und 80 $\mu$m Gesamtdurchmesser angenommen. Die numerische Apertur der Dickkernfaser 1 sei 0,4 und die der Glasfaser 3 0,2 bis 0,4. Bei diesem Beispiel wird die in der Dickkernfaser 1 geführte Strahlung um etwa 20 % geschwächt.

Eine besonders interessante Variante zu der soeben beschriebenen Ausführungsform mit drei Fasertoren ist eine Anordnung, bei der anstelle der Glasfaser 3 eine Strahlungsquelle, beispielsweise eine Laserdiode, neben der Dickkernfaser 1 angeordnet ist.

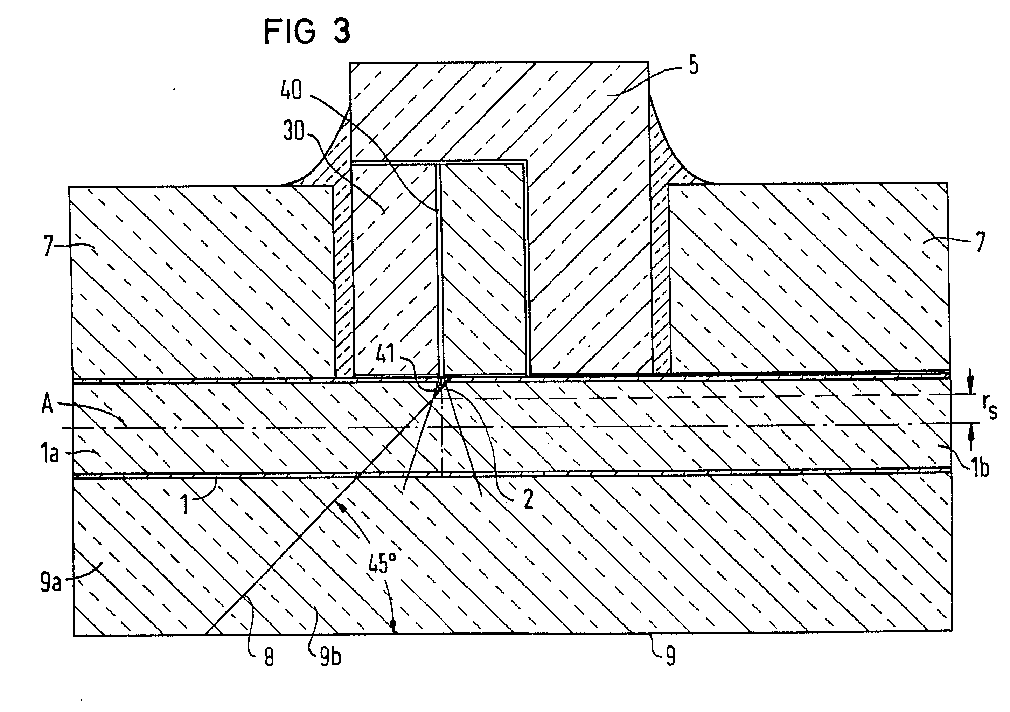

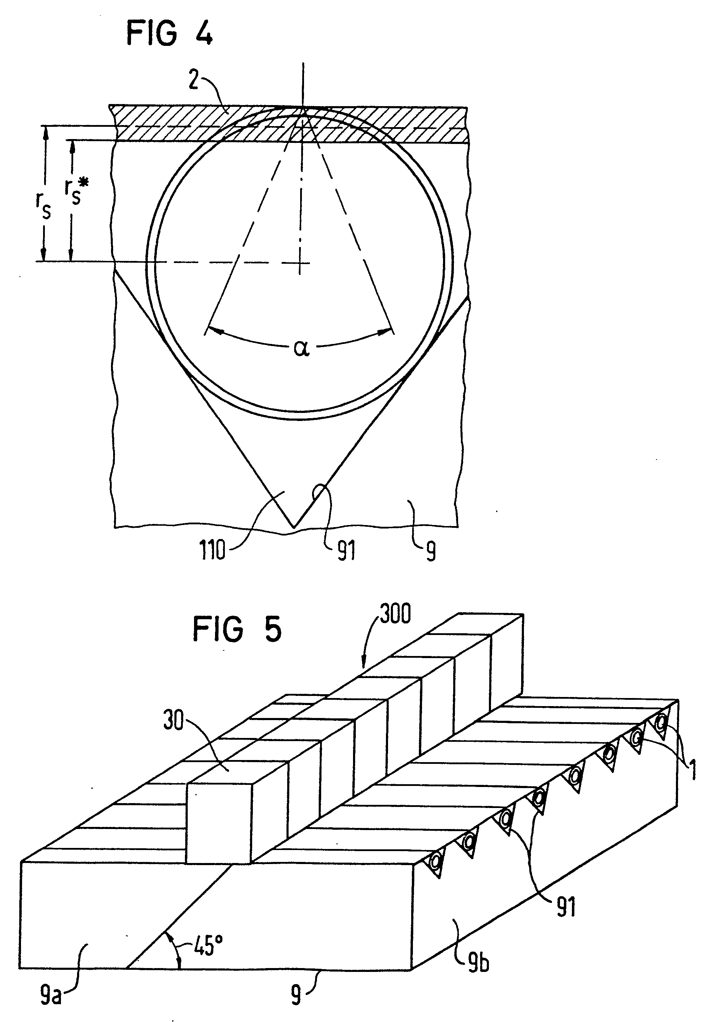

In den Figuren 3 und 4 ist ein Beispiel dazu dargestellt. Die Figur 3 zeigt einen vertikalen Längsschnitt längs der Achse der Dickkernfaser 1, die auf einem Trägerkörper 9 aufgebracht ist. Über der Spiegelschicht 2 ist eine Laserdiode 30 angeordnet, deren aktive Zone mit 40 bezeichnet ist. Die rechteckförmige Emissionsfläche 41 der Diode 30, welche dem Strahlungsaustrittsfenster gleichzusetzen ist, ist der Spiegelschicht 2 zugewandt und ihre Längsachse verläuft senkrecht zur Achse A der Dickkernfaser 1.

Wie aus der Figur 4, die eine Ansicht der herstellungsbedingten Trennfläche 8 zeigt, hervorgeht, besteht die Spiegelschicht 2 im vorliegenden Fall aus einem schmalen Streifen, der ein Segment des Kernquerschnitts der Dickkernfaser 1 überdeckt.

Die kleine Emissionsfläche 41 der Laserdiode 30, typisch z. B. 0,2 $\mu$m mal 0,4 $\mu$m, und der Öffnungswinkel der Abstrahlung, der quer zur Längsrichtung der Emissionsfläche gemessen in Luft etwa 30° bis 60° und parallel zur Längsrichtung gemessen in Luft etwa 20° bis 40° beträgt, machen die Laserdiode als Strahlungsquelle besonders geeignet.

Aus der Abstrahlcharakteristik der Strahlungsquelle 30, dem Abstand des Strahlungsaustrittsfenster 41 von der Dickkernfaser 1 bzw. von der Spiegelschicht 2 sowie aus der Form und Größe des Strahlungsaustrittsfensters 41 lassen sich optimale Abmessungen und eine optimale Form für die Spiegelschicht 2 finden, bei denen ein größtmöglicher Einkoppelwirkungsgrad bei geringster Abschwächung der geführten Strahlung erreicht wird.

Für das früher angegebene Beispiel für die Dickkernfaser 1 und für die vorstehend angegebenen Werte für die Laserdiode 30 erwies sich die streifenförmige Spiegelschicht 2 nach Figur 4 als besonders günstig. Bei einem Abstand S des Strahlungsaustrittsfensters 41 von der Oberfläche der Dickkernfaser 1 — hervorgerufen durch optischen Kleber — von 10 $\mu$m ergibt sich dabei ein günstiger radialer Abstand $r_s$ des Streifens 2 von der Achse A der Dickkernfaser 1.

Dieser Abstand $r_s$ läßt sich aus der Formel

0 026 379

$$r_s = \frac{r_M - r_K \cot \alpha/2 + S}{1 - \cot \alpha/2}$$

ermitteln. Dabei bedeuten :

$r_M$ = Gesamtradius

$r_K$ = Kernradius der Dickkernfaser

$\alpha$ = der größere der beiden Winkel : Akzeptanzwinkel der Dickkernfaser oder maximaler Öffnungswinkel der Strahlungscharakteristik senkrecht zur Längsrichtung des Fensters 41 gemessen.

Bei einem Brechungsindex des Kernglases von 1,63 und des Mantelglases von 1,58 beträgt der Akzeptanzwinkel 28°, während der maximale Öffnungswinkel 33° beträgt, also größer ist. Es ist in diesem Fall also mit dem Akzeptanzwinkel zu rechnen.

Bei den oben angegebenen Werten ergibt sich der Abstand $r_s$ zu $r_s \approx 105\ \mu m$.

Daraus errechnet sich der theoretische Wirkungsgrad $\eta$ zu $\eta$ = 99,4 %. $\eta$ ist dabei das Verhältnis aus der von der Spiegelschicht nicht überdeckten Querschnittsfläche des Kerns 11 zu dessen gesamter Querschnittsfläche.

Dieses Ergebnis bedeutet, daß die in der Dickkernfaser 1 geführte Strahlung praktisch nicht gestreut wird, obgleich die Strahlung der Laserdiode mit dem Wirkungsgrad einer üblichen Stirnflächenkopplung (ohne Linse) über die Spiegelschicht eingekoppelt wird.

Praktisch kann man für die Transmission in der Dickkernfaser mit Einfügeverlusten von ca. 0,5 dB rechnen, die durch Justierungenauigkeiten, beispielsweise Achsenversatz, bei der Montage auftreten. Deshalb können die Herstellungstoleranzen gelockert werden und der Abstand des Streifens 2 von der Achse A auf $r_s*$ verkleinert werden. In dem angegebenen Beispiel kann z. B. $r_s*$ = 85 $\mu m$ gewählt werden, was einer Justiertoleranz von 20 $\mu m$ entspricht. Mit diesem Wert ergibt sich $\eta$ = 94 %, so daß die Transmissionsverluste in der Dickkernfaser unter 0,7 dB bleiben werden.

Wenn die Strahlungscharakteristik der Strahlungsquelle ungünstig ist, können zu ihrer Verbesserung optische Linsen verwendet werden, die dann zwischen Strahlungsquelle und Dickkernfaser anzuordnen sind.

Als Spiegelschicht hohen Reflexionsvermögens eignet sich vorteilhaft ein Vielfachschichtensystem, wie es in « Siemens Forschungs- und Entwicklungsbericht » 8 (1979) S. 136-140 beschrieben ist. Dort sind auch Dimensionierungsvorschriften für ein solches Vielfachschichtensystem angegeben. Für ein gefordertes Reflexionsvermögen von 90 % und für unpolarisierte Strahlung sind beispielsweise etwa 15 Schichten aufzubringen.

Eine erfindungsgemäße Vorrichtung wird zweckmäßigerweise so hergestellt, daß eine Dickkernfaser 1 oder ein anderer verwendeter Lichtwellenleiter zunächst in eine Führungsnut 91 (siehe Figur 4) eines Trägerkörpers 9 (siehe Figur 3 und 4) mit optisch verlustarmem Kleber 110 eingeklebt wird. Nach dem Aushärten des Klebers 10 wird der Trägerkörper 9 mit der befestigten Faser 1 durch einen im Winkel von 45° zur Achse A der Faser geführten Schnitt in zwei Teile zerlegt und die entstandenen Trennflächen 8 werden poliert. Die Spiegelschicht 2 wird als metallene Einzelschicht oder als dielektrische Vielfachschicht unter Verwendung einer geeigneten Kontaktmaske aufgedampft. Dann werden beide Teile, jedes bestehend aus einem Körperteil 9a bzw. 9b und einem Dickkernfaserabschnitt 1a bzw. 1b wieder achsfluchtend verkittet. Dann wird die weitere Faser 3 oder die Strahlungsquelle 30 aufgekittet, derart, daß ihre Achse das Zentrum der Spiegelschicht im Kernbereich trifft und mit der Achse A der Dickkernfaser einen Winkel von 90° bildet.

In der Figur 3 ist noch eine Deckschicht 7 gezeigt, die üblicherweise aufgebracht ist. Mit 5 ist speziell eine übliche Diodenhalterung bezeichnet. Auch die Faser 3 wird zweckmäßigerweise in eine zweckmäßige Halterung eingebettet, beispielsweise in eine Kapillare.

Anstelle einer einzelnen Dickkernfaser 1 in einer Führungsnut 91 können auch mehrere nebeneinander liegende Fasern 1 in Nuten 91 auf dem Trägerkörper 9 angeordnet werden. Dies führt zu einem Einkoppelblock, wie er in der Figur 5 dargestellt ist. Anstelle einer einzelnen Diode 30 wird jetzt eine Diodenzeile 300 aufgebracht. Auch mehrere in einem Trägerkörper nebeneinander befestigte Glasfasern 3 können aufgebracht werden.

**Patentansprüche**

1. Vorrichtung zum seitlichen Einkoppeln von Licht in einen aus einer Glasfaser mit einem lichtführenden Kern (11) bestehenden Lichtwellenleiter (1) mit einer im Kern (11) des Lichtwellenleiters (1) geneigt zu dessen Achse (A) angeordneten, flächig auf eine Stirnfläche des Lichtwellenleiters (1) aufgebrachten Spiegelschicht, der Licht von der Seite des Lichtwellenleiters (1) zuführbar ist, dadurch gekennzeichnet, daß die Spiegelschicht aus einer nur eine geringe Teilfläche der gesamten Querschnittsfläche des Kerns (11) einnehmenden Spiegelschicht (2) mit hohem Reflexionsvermögen besteht, auf die das einzukoppelnde Licht konzentriert ist.

2. Vorrichtung nach Anspruch 1, dadurch gekennzeichnet, daß die Spiegelschicht (2) auf derjenigen Seite des Kerns (11) angeordnet ist, über die das Licht eingekoppelt wird.

3. Vorrichtung nach Anspruch 1 oder 2, dadurch gekennzeichnet, daß der Lichtwellenleiter (1) aus einer Dickkernfaser besteht.

4. Vorrichtung nach einem der vorhergehenden Ansprüche, dadurch gekennzeichnet, daß das seitlich einzukoppelnde Licht dem Lichtwellenleiter (1) mit einem weiteren Lichtwellenleiter (3) zugeführt ist, wobei der Spiegelschicht (2) zugekehrten Stirnfläche (310) des weiteren Lichtwellenleiters (3) von der Spiegelschicht (2) so aufeinander abgestimmt sind, daß der sich erweiternde Strahlenkegel des von der Stirnfläche (310) abgestrahlten Lichts im wesentlichen ganz auf die Spiegelschicht (2) trifft.

5. Vorrichtung nach Anspruch 4, dadurch gekennzeichnet, daß die Achse (A') des weiteren Lichtwellenleiters (3) mit der Spiegelschicht (2) den gleichen Winkel einschließt, wie die Achse (A) des einen Lichtwellenleiters (1), und daß der weitere Lichtwellenleiter (3) eine numerische Apertur aufweist, die höchstens gleich der numerischen Apertur des Wellenleiters (1) ist.

6. Vorrichtung nach Anspruch 5, dadurch gekennzeichnet, daß der weitere Lichtwellenleiter (3) bis ganz an den einen Lichtwellenleiter (1) heranreicht.

7 Vorrichtung nach einem der Ansprüche 1 bis 3, dadurch gekennzeichnet, daß das seitlich einzukoppelnde Licht dem Lichtwellenleiter (1) aus einer Lichtquelle (30) in Form eines Halbleiterlasers oder einer Lumineszenzdiode direkt zugeführt ist, wobei der Durchmesser der der Spiegelschicht (2) zugekehrten lichtemittierenden Fläche (41) der Lichtquelle (30) und der optische Abstand dieser Fläche von der Spiegelschicht (2) so aufeinander abgestimmt sind, daß der sich erweiternde Strahlenkegel des von der lichtemittierenden Fläche (41) abgestrahlten Lichts im wesentlichen ganz auf die Spiegelschicht (2) trifft.

8. Vorrichtung nach Anspruch 7, dadurch gekennzeichnet, daß die Lichtquelle (30) unmittelbar auf den Lichtwellenleiter (1) aufgesetzt ist.

9. Vorrichtung nach Anspruch 1, dadurch gekennzeichnet, daß das seitlich einzukoppelnde Licht durch eine optische Linse auf die Spiegelschicht (2) konzentriert ist.

## Claims

1. A device for laterally coupling light in an optical waveguide (1) which consists of a glass fibre with a light-conducting core (11), and which has a reflective layer arranged in the core (11) of the light waveguide (1) so as to be tilted with respect to the axis (A) thereof, and which is placed surfacewise onto an end face of the light waveguide (1), to which reflective layer light is to be supplied from the side of the light waveguide (1), characterised in that the reflective layer consists of a reflective layer (2) which covers only a negligible part-surface of the overall cross-sectional surface of the core (11), which has a high reflectivity and onto which the light to be input-coupled is focussed.

2. A device as claimed in Claim 1, characterised in that the reflective layer (2) is arranged on that side of the core (11) through which the light is to be input-coupled.

3. A device as claimed in Claim 1 or Claim 2, characterised in that the light waveguide (1) consists of a thick-core fibre.

4. A device as claimed in one of the preceding Claims, characterised in that the light which is to be laterally coupled into the light waveguide (1) is supplied by means of a further light waveguide (3), wherein the diameter of the core and the optical distance from the reflective layer (2) of the end face (310) of the further light waveguide (3) which faces towards the reflective layer (2), are so co-ordinated that the expanding cone of light rays which is emitted from the end face (31), impinges essentially entirely upon the reflective layer (2). .

5. A device as claimed in Claim 4, characterised in that the axis (A') of the further light waveguide (3) includes the same angle with the reflective layer (2) as does the axis (A) of the one light waveguide (1) ; and that the further light waveguide (3) has a numerical aperture which at most equals the numerical aperture of the waveguide (1).

6. A device as claimed in Claim 5, characterised in that the further light waveguide (2) extends fully up to the one light waveguide (1).

7. A device as claimed in one of Claims 1 to 3, characterised in that the light which is to be laterally input-coupled is directly fed to the light waveguide (1) from a light source (30) in the form of a semiconductor laser or a luminescence diode, the diameter of the light-emitting surface (41) of the light source (30) which faces towards the reflective layer (2), and the optical distance of this surface from the reflective layer (2), being so co-ordinated that the expanding cone of light rays emitted from the light-emitting surface (41), impinges essentially entirely upon the reflective layer (2).

8. A device as claimed in Claim 7, characterised in that the light source (30) is placed directly on the light waveguide (1).

9. A device as claimed in Claim 1, characterised in that the light which is to be laterally input-coupled is focussed onto the reflective layer through an optical lens.

## Revendications

1. Dispositif pour l'introduction latérale de la lumière dans un guide d'onde de lumière (1) constitué par une fibre de verre à cœur (11) guidant la lumière, avec une couche spéculaire disposée dans le cœur

(11) du guide d'onde de lumière, incliné par rapport à l'axe (A) de ce dernier et s'étendant sur une certaine surface de la face frontale du guide d'onde de lumière, surface spéculaire sur laquelle de la lumière peut être amenée à partir du côté du guide d'onde de lumière (1), caractérisé par le fait que la surface spéculaire est constituée par une couche spéculaire (2) à haut pouvoir de réflexion, qui n'occupe qu'une faible surface partielle de la totalité de la surface de la section transversale du cœur (11), et sur laquelle est concentrée la lumière à introduire dans le guide d'onde de lumière.

2. Dispositif selon la revendication 1, caractérisé par le fait que la couche spéculaire (2) est disposée sur le côté du cœur (11), à partir duquel la lumière est introduite dans le guide de lumière.

3. Dispositif selon la revendication 1 ou 2, caractérisé par le fait que le guide d'onde de lumière (1) est constitué par une fibre à cœur épais.

4. Dispositif selon l'une des revendications précédentes, caractérisé par le fait que la lumière à introduire latéralement est amenée au guide d'onde de lumière (1) à l'aide d'un second guide d'onde de lumière (3), le diamètre du cœur et la distance optique entre la surface frontale (310) du second guide d'onde de lumière (3), qui est dirigée vers la couche spéculaire (2) et cette dernière, sont accordés entre eux de telle façon que le cône lumineux de la lumière émise par la surface frontale (310), et qui va en s'élargissant, rencontre, pour l'essentiel, la totalité de la couche spéculaire (2).

5. Dispositif selon la revendication 4, caractérisé par le fait que l'axe (A') du second guide d'onde de lumière (3) détermine avec la couche spéculaire (2) le même angle que l'axe (A) du premier guide d'onde de lumière (1), et que le second guide d'onde de lumière (3) possède une ouverture numérique qui est au maximum égale à l'ouverture numérique du guide d'onde de lumière (1).

6. Dispositif selon la revendication 5, caractérisé par le fait que le second guide d'onde de lumière (3) s'étend jusqu'à totalement le second guide d'onde de lumière (1).

7. Dispositif selon l'une des revendications 1 à 3, caractérisé par le fait que la lumière qui est à introduire latéralement est amenée directement au guide d'onde de lumière (1) à partir d'une source de lumière (30) qui se présente sous la forme d'un laser à semiconducteurs ou d'une diode luminescente, le diamètre de la surface (41) de la source lumineuse (30), qui est dirigée vers la couche spéculaire (2), et la distance optique entre cette surface et la couche spéculaire (2) sont accordées entre eux de façon que le cône lumineux qui s'élargit et qui est émis par la surface photo-émettrice (41), rencontre, pour l'essentiel, totalement la couche spéculaire (2).

8. Dispositif selon la revendication 7, caractérisé par le fait que la source lumineuse (30) est montée directement sur le guide d'onde de lumière (1).

9. Dispositif selon la revendication 1, caractérisé par le fait que la lumière à introduire latéralement est concentrée sur la couche spéculaire (2), à l'aide d'une lentille optique.

## FIG 1

A'

31 — 32

3

310 — 2 — 12 — 11 — A

1

## FIG 2

2

U ———————————— U

12 — 1

# FIG 3

0 026 379

FIG 4

FIG 5